# FASCICULE DE BREVET EUROPEEN

(11) **EP 2 233 949 B1**
(45) Date de publication et mention de la délivrance du brevet: **09.11.2011**
(21) Numéro de dépôt: 10305072.0
(22) Date de dépôt: 22.01.2010
(51) Int. Cl.: G01T 1/29

(54) **Dispositif de détection de rayonnement ionisant**
Vorrichtung zum Nachweis ionisierender Strahlung
Apparatus for the detection of ionizing radiation

(30) Priorité: 26.02.2009 FR 0900875
(43) Date de publication de la demande: 29.09.2010
(73) Titulaire: Commissariat à l'Énergie Atomique et aux Énergies Alternatives, 75015 Paris (FR)
(72) Inventeur: Gros D'Aillon, Eric, 38320, BRIE ET ANGONNES (FR); Ruat, Marie, 48310, TERMES (FR); Verger, Loïck M., 38000, GRENOBLE (FR)
(74) Mandataire: Vuillermoz, Bruno

(56) Documents cités:
- EP-A2- 1 674 887
- FR-A1- 2 887 993
- US-A1- 2003 010 942
- US-A1- 2007 007 463
- MARIE RUAT ET AL: "3D semiconductor radiation detectors for medical imaging: Simulation and design" NUCLEAR SCIENCE SYMPOSIUM CONFERENCE RECORD, 2008. NSS '08. IEEE (19-25 OCT. 2008), IEEE, PISCATAWAY, NJ, USA, 19 octobre 2008 (2008-10-19), pages 434-439, XP031419470 ISBN: 978-1-4244-2714-7

## Description

### DOMAINE TECHNIQUE

La présente invention concerne un dispositif de détection de rayonnement ionisant, qu'il s'agisse notamment de particules chargées ou d'ondes électromagnétiques. Un tel dispositif est communément mis en oeuvre, tout d'abord et dans un but premier de détection de ce type d'ondes et de particules à des fins notamment scientifiques ou médicales, et ensuite pour former des images de certaines parties d'un objet à partir des rayons transmis à travers ou diffusés ou diffractés par cet objet après irradiation, dans le but par exemple d'analyser la composition chimique de cet objet. Ce dispositif a également pour vocation d'effectuer des images ou des mesures par spectrométrie.

### ETAT ANTERIEUR DE LA TECHNIQUE

Pour former des images, il est connu notamment dans le domaine de l'imagerie par rayonnements X ou gamma, de mettre en oeuvre un dispositif de détection parallélépipédique à deux directions principales, en général de type matriciel. Les deux directions principales définissent classiquement un plan de détection, dans lequel le détecteur permet la localisation du lieu d'interaction du rayonnement incident avec le détecteur. Il est en outre connu d'employer de tels détecteurs pour former des images numériques, c'est-à-dire codées en une séquence de bits informatiques.

Un tel détecteur comprend généralement un matériau interagissant avec ledit rayonnement incident par libération de charges électriques mobiles, et des électrodes entre lesquelles est défini un champ électrique, induisant le déplacement des charges électriques mobiles libérées. Parmi ces électrodes, on distingue en général une cathode unitaire, formant un ensemble équipotentiel sur le plan de détection, et une ou plusieurs anodes, constituées d'une pluralité de points ou pixels juxtaposés formant une matrice dans le plan de détection. Ces électrodes collectent donc lesdites charges constituant le signal de détection, et sont reliées à des voies de mesure. On parle alors d'électrodes collectantes.

Certains matériaux constitutifs de tels détecteurs ne possèdent pas de bonnes propriétés de transport de charges. Ainsi, au-delà d'une certaine épaisseur, les charges n'atteignent pas, ou atteignent en nombre trop réduit lesdites électrodes collectantes. Le signal collecté est alors soit nul, soit trop faible pour être exploité. En conséquence, l'épaisseur utile du matériau détecteur est limitée par les propriétés de transport de charges dudit matériau. Or, l'efficacité de détection, définie comme étant le rapport entre le nombre de photons détectés sur le nombre de photons incidents, dépend directement de l'épaisseur dudit matériau détecteur. Cette efficacité est donc également limitée par les propriétés de transport de charges du matériau détecteur.

Par ailleurs, il est connu que le déplacement d'un nuage de porteurs de charges au voisinage d'une électrode isolée électriquement, engendre par effet capacitif, une charge dite charge induite dans cette électrode. Ce type d'électrode est communément appelé électrode non collectante. La mise en oeuvre d'une telle électrode non collectante est connue de l'art antérieur.

On a par exemple décrit dans le document FR-2 887 993 un dispositif de détection constitué d'un matériau détecteur, dont les faces opposées sont connectées respectivement à une cathode et à un réseau anodique, ce dernier étant constitué par des anodes coplanaires disposées en lignes, dénommées lignes anodiques. Une couche d'isolant électrique est disposée entre le plan anodique et un réseau d'électrodes non collectantes, de telle sorte que la collecte d'une charge sur l'anode induit une charge dans les électrodes non collectantes situées à proximité. Ce faisant, ce dispositif permet de déduire la position en X et en Y, c'est-à-dire selon les deux directions principales du plan de détection de la collecte dans le plan anodique, et qui correspond également à la position en X et en Y de l'interaction avec le rayonnement incident, les charges migrant dans un plan parallèle au champ électrique. La position selon la cotte Z ou profondeur d'interaction, peut être déterminée par le calcul du temps de montée selon le procédé décrit dans ce document.

Il est donc possible de par la mise en oeuvre d'électrodes non collectantes disposées au sein ou à proximité d'un réseau anodique, de déterminer les coordonnées d'une interaction dans un matériau de détecteur dans un plan perpendiculaire au champ électrique de polarisation des électrodes collectantes.

Cependant, et ainsi que rappelé précédemment, on sait que la mobilité et/ou la durée de vie des porteurs de charge dans certains matériaux de détection est faible. Ainsi, lorsque l'interaction du rayonnement incident avec ledit matériau détecteur a lieu au-delà d'une certaine distance des électrodes de polarisation ou électrodes collectantes, les porteurs de charge ne parviennent pas à atteindre une électrode collectante. Ainsi, dans une telle hypothèse, l'interaction n'est pas détectée. L'épaisseur utile du matériau détecteur, c'est-à-dire celle dans laquelle les interactions donnent lieu à la genèse de porteurs de charge collectés par une électrode collectante est donc limitée. Ce faisant, l'efficacité de détection d'un tel dispositif s'avère limitée.

### EXPOSE DE L'INVENTION

L'objet de l'invention est donc de proposer un dispositif de détection d'un rayonnement électromagnétique ou de particules chargées, dont la structure permet d'augmenter l'épaisseur utile du matériau de détection afin d'aboutir à une meilleure efficacité de détection.

L'invention porte donc sur un dispositif de détection de rayonnements ionisants comprenant un empilement intégrant un premier ensemble d'électrodes, un matériau détecteur solide sensible aux rayonnements ionisants, susceptible d'interagir avec ceux-ci par libération de porteurs de charges mobiles électrons-trous, et un second ensemble d'électrodes, lesdits premier et second ensembles d'électrodes étant polarisés de telle façon qu'un champ électrique soit appliqué à travers le matériau détecteur, permettant ainsi la migration des porteurs de charges générés par l'interaction entre le matériau détecteur et les rayonnements ionisants.

Selon l'invention, le dispositif comprend en outre des électrodes isolées électriquement, dénommées électrodes non collectantes, et positionnées au sein du volume du matériau détecteur soumis au champ électrique, et destinées, par effet capacitif, à détecter les charges induites par la migration des porteurs de charge dans le volume du détecteur soumis au champ électrique.

Ces électrodes non collectantes sont séparées du milieu détecteur par une couche électriquement isolante. Ainsi, la liaison capacitive précitée peut s'établir entre les charges migrant dans le matériau de détection, à proximité de la couche isolante, et lesdites électrodes.

Autrement dit, chacune de ces électrodes dites non collectantes est reliée par liaison capacitive avec un certain volume du détecteur situé à proximité de la couche isolante.

Ce faisant, lorsque des porteurs de charge migrent dans le matériau détecteur, sous l'effet du champ électrique généré entre lesdits premier et second groupes d'électrodes, ceux-ci sont appelés à passer à proximité des électrodes non collectantes et ces dernières détectent par effet capacitif des charges induites. Il devient donc ainsi possible de recueillir un signal induit par la migration des porteurs de charge à l'intérieur du milieu détecteur, même si lesdits porteurs de charge ne sont pas collectés par lesdits premier ou second ensembles d'électrodes.

En sélectionnant de manière appropriée le lieu d'implantation des électrodes non collectantes au sein du matériau détecteur, il devient possible de détecter la migration des porteurs de charge au plus prêt de l'interaction les ayant générés. Cette détection peut être exploitée, quand bien même ces porteurs de charge ne parviennent pas aux électrodes générant le champ électrique, c'est-à-dire appartenant au premier et au second groupe d'électrodes.

Ce faisant, il devient possible de mettre en oeuvre comme matériau de détection, des matériaux connus comme ne présentant pas de bonnes propriétés de transport de charges, qui n'avaient pas été mis en oeuvre à ce jour en raison de leur faible efficacité.

Selon l'invention, les voies de mesure sont les bornes des électrodes non collectantes, auxquelles on connecte les dispositifs connus de l'état antérieur de la technique permettant le traitement (par exemple intégrateurs, préamplificateurs amplificateurs, compteurs, analyseurs multicanaux, discriminateurs), la lecture et l'enregistrement du signal. Bien évidemment, le détecteur conforme à l'invention peut utiliser également les signaux collectés par au moins lesdits premier ou second groupes d'électrodes.

Selon un premier mode de réalisation de l'invention, les électrodes non collectantes sont disposées parallèlement au champ électrique et présentent des longueurs différentes. Selon cette configuration, l'extrémité libre desdites électrodes est située dans le matériau détecteur. L'autre extrémité est reliée à un dispositif de mesure de l'état de l'art, par exemple un pré-amplificateur suivi d'un amplificateur et d'un convertisseur analogique numérique, ou un pré-amplificateur suivi d'un compteur, ou encore d'un circuit intégrateur.

Selon ce mode de réalisation, les électrodes non collectantes peuvent être constituées d'une zone conductrice constituée d'une première partie étroite et longiligne, débouchant sur une seconde partie, plus large et plus courte, formant l'extrémité libre de l'électrode.

La première partie est isolée du matériau détecteur par une forte épaisseur d'un premier matériau isolant à faible permittivité, et la seconde partie, dite extrémité, étant isolée du matériau détecteur par une faible épaisseur d'un second matériau isolant, dont la permittivité est plus élevée que le celle du premier matériau isolant.

Selon une autre forme de réalisation de l'invention, les électrodes non collectantes sont disposées parallèlement aux électrodes de polarisation, et donc perpendiculairement au champ électrique, et ce, selon un ou plusieurs plans parallèles auxdites électrodes de polarisation.

### BREVE DESCRIPTION DES FIGURES

La manière de réaliser l'invention ainsi que les avantages qui en découlent ressortiront mieux de la description des modes de réalisation qui suivent, donnés à titre indicatif et non limitatif à l'appui des figures annexées dans lesquelles :
La figure 1 est une représentation schématique en section visant à illustrer le principe de l'invention selon un premier mode de réalisation d'un détecteur conforme à l'invention.
La figure 2a est une représentation schématique en perspective du détecteur de l'invention illustrant de manière plus précise ce premier mode de réalisation, dont la figure 2b est une représentation schématique en section longitudinale et la figure 2c une vue en section transversale.
La figure 3 est une représentation schématique d'une simulation en deux dimensions des lignes de champ produites par un détecteur comprenant une pluralité d'électrodes non collectantes de différentes longueurs selon ce premier mode de réalisation.
La figure 4a est une représentation schématique en deux dimensions du trajets des porteurs de charge au sein du détecteur selon le premier mode de réalisation de l'invention, et la figure 4b représente le signal de charge correspondant auxdits trajets.
Les figures 5a à 5d représentent une simulation en deux dimensions de la distribution du potentiel de pondération au voisinage d'une électrode non collectante.
La figure 6 est une représentation d'une simulation 3D, illustrant la distribution en trois dimensions du potentiel de pondération au voisinage d'une électrode non collectante.
La figure 7 est une représentation schématique en section d'un second mode de réalisation dans l'invention.
La figure 8 est une représentation schématique en perspective partielle de ce second mode de réalisation.
La figure 9 représente schématiquement un détecteur solide en section conforme au second mode de réalisation de l'invention, dans lequel une seule électrode non collectante a été représentée.
La figure 10 représente les différentes lignes isopotentielles du détecteur de la figure 9.
La figure 11 représente les lignes de champ électrique du détecteur de la figure 9, représentant également les trajectoires suivies par les porteurs de charge au cours de leur migration.
La figure 12 représente le potentiel de pondération sur une électrode non collectante du détecteur de la figure 9 en fonction de la position du porteur de charge dans le détecteur.
La figure 14 représente les signaux temporels d'induction de charges l'électrode non collectante représentée sur le détecteur de la figure 9, pour différentes positions d'interaction matérialisées sur ladite figure 13.

### DESCRIPTION DETAILLEE DE L'INVENTION

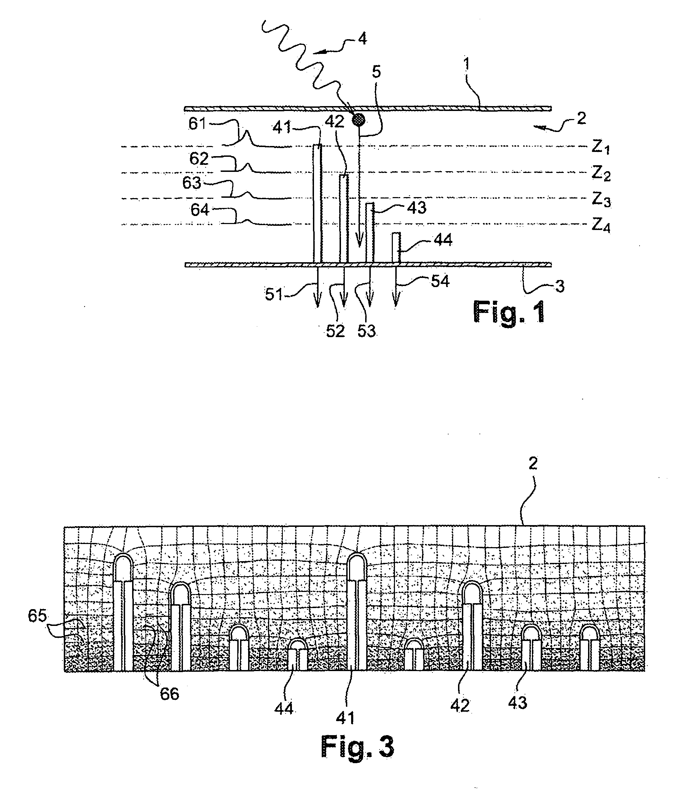

On a représenté schématiquement sur la figure 1 une vue en section d'un détecteur de rayonnement ionisant conforme à un premier mode de réalisation de l'invention.

Fondamentalement, ce détecteur comprend un empilement d'un premier ensemble d'électrodes (1), en l'espèce constitué d'une cathode unitaire, d'un matériau sensible (2) au rayonnement ionisant, tel que par exemple réalisé en un alliage de cadmium, de zinc et de tellure (CdZnTe), et d'un second ensemble d'électrodes (3), constitué par exemple d'une matrice d'anodes. Les ensembles d'électrodes (1) et (3) sont polarisés de telle sorte à créer entre elles et donc au travers du matériau de détection (2) un champ électrique.

Le matériau constitutif du détecteur proprement dit (2) peut également être réalisé en matériau semi conducteur de type Si, GaAs, Ge, InP, CIS, voire de polymères de semi conducteurs. L'épaisseur dudit matériau est typiquement comprise entre quelques centaines de micromètres et quelques millimètres, voire même au-delà. Comme déjà précisé en préambule, l'efficacité de détection est directement liée à l'épaisseur de matériau de détection mis en oeuvre.

Selon un premier mode de réalisation de l'invention, il est inséré dans le matériau de détection (2) une pluralité d'électrodes non collectantes, en l'espèce référencée (41) à (44). Ces électrodes non collectantes présentent des longueurs différentes respectivement Z1-Z4, ainsi qu'on peut bien l'observer sur la figure 1.

Elles sont orientées sensiblement parallèlement au champ électrique généré entre la cathode (1) et les anodes (3).

Ces électrodes non collectantes sont réalisées en un matériau conducteur, par exemple un métal, gainé d'une couche d'au moins un matériau isolant.

Selon un mode de réalisation préféré, une électrode non collectante comporte une première partie, ou canal, longiligne (30), perpendiculaire au plan défini par la matrice d'anodes, ladite première partie étant en contact avec une voie de mesure (51, 52, 53, 54 sur la figure 1), le contact pouvant être établi dans le plan de la matrice d'anodes. Cette première partie (30) peut être de forme cylindrique ou parallélépipédique. Dans le cas d'un cylindre, le diamètre peut être compris entre quelques micromètres à 20 micromètres, ces valeurs correspondant à la plus grande largeur dans le cas d'un parallélépipède. La longueur de cette première partie est variable, comme on peut le voir sur la figure 1.

La matrice d'anodes peut comporter plusieurs anodes, ponctuelles, parallélépipédiques ou longilignes, selon des dispositions connues de l'état de l'art. Il peut également s'agir d'une seule anode surfacique. Dans ce cas, elle sera traversée par les électrodes non collectantes

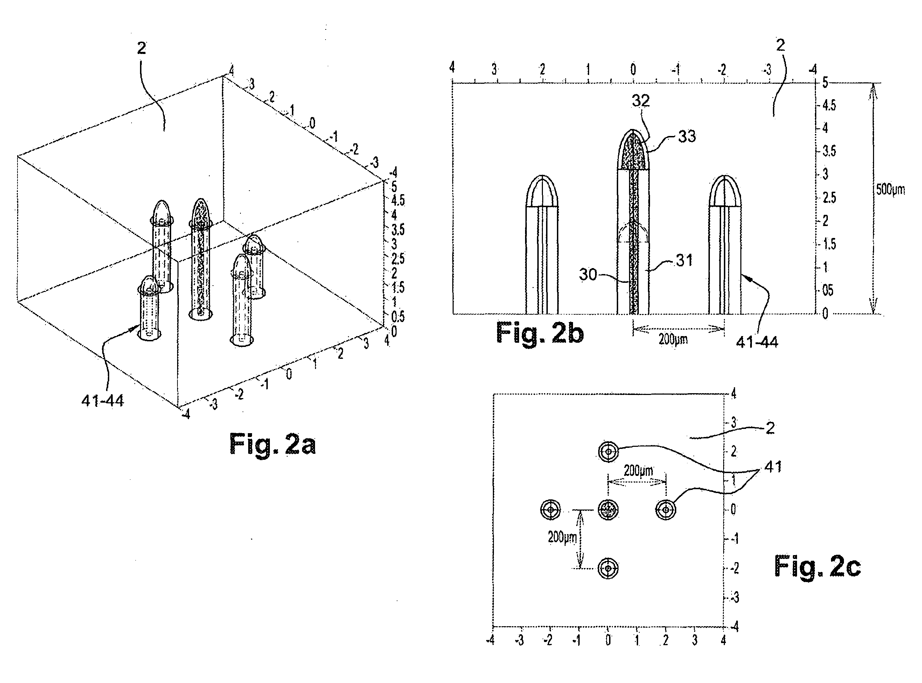

Cette première partie conductrice (30) est isolée du matériau détecteur (2) par une épaisseur d'un premier matériau isolant (31), dont la permittivité relative est faible, typiquement comprise entre 1 et 4, préférentiellement voisine de 2. Sur l'exemple des figures 2a à 2c, l'épaisseur de cette couche isolante (31) est de 30 micromètres, le diamètre du matériau conducteur (30) étant de 10 micromètres.

Cette première partie aboutit à une extrémité, plus large (32), de faible longueur au regard de celle de la première partie (30), également constituée d'un matériau conducteur, par exemple identique à celui constituant la première partie. Cette extrémité (32) est isolée du matériau détecteur (2) par un second matériau isolant (33).

La permittivité diélectrique de ce second matériau isolant est préférentiellement plus élevée que celle du premier matériau isolant (31), et typiquement comprise entre 4 et 13, et de préférence la plus proche possible de celle du matériau détecteur.

Cette extrémité, ou seconde partie peut être cylindrique, parallélépipédique, ou pyramidale. La longueur de cette seconde partie est généralement fixe, quelle que soit la longueur de l'électrode non collectante concernée. Comme déjà indiqué, cette longueur est plus faible que la longueur du canal ou première partie, typiquement quelques dizaines de micromètres. Sa plus grande largeur, ou son diamètre dans le cas d'une extrémité cylindrique, est comprise entre quelques dizaines et quelques centaines de micromètres, et typiquement comprise entre 30 et 100 micromètres.

Sur l'exemple de la figure 2, l'épaisseur de matériau isolant (33) au niveau de l'extrémité (32) s'élève à 10 micromètres, soit trois fois moins importante que l'épaisseur de la couche du premier matériau isolant (31).

Afin d'obtenir une charge induite importante, des simulations ont montré qu'il était avantageux que l'électrode présente les caractéristiques suivantes :
- un canal conducteur fin (30), de longueur variable, isolé du matériau détecteur (2) à l'aide d'une épaisseur relativement importante d'un premier matériau isolant (31) de permittivité diélectrique faible ; on entend par relativement importante une épaisseur d'isolant supérieure ou voisine au diamètre (ou à la plus grande largeur) de l'électrode ; idéalement, le diamètre du canal conducteur fin est constant sur toute sa longueur ; ainsi, l'épaisseur d'isolant est plus importante autour dudit canal, en comparaison avec celle autour de la pointe.
- une extrémité large (32), de faible longueur, isolée du matériau détecteur à l'aide d'une épaisseur relativement faible d'un second matériau isolant (33), de permittivité diélectrique plus élevée ; on entend par relativement faible une épaisseur d'isolant inférieure au diamètre (ou à la plus grande largeur) de l'électrode ;
- le canal conducteur (30) et l'extrémité large (32) étant en continuité électrique.

Des essais ont montré que selon cette configuration, la charge induite au niveau de l'électrode non collectante concernée est d'autant plus élevée que la permittivité du second matériau isolant est élevée, cette permittivité pouvant avantageusement être supérieure à celle du matériau détecteur.

A titre exemplatif, une telle électrode non collectante est constituée d'un fil réalisé en matériau conducteur. Un tel matériau conducteur est par exemple constitué d'un métal ou d'un semi-conducteur fortement dopé. Les matériaux isolants utilisés pour les gainages respectifs du canal (30) et de l'extrémité (32) de chaque électrode sont constitués de matériaux dont la conductivité électrique est inférieure de plusieurs ordres de grandeur à celle du matériau détecteur. Leur résistivité est préférentiellement supérieure à 10¹¹ Ω.cm. A titre exemplatif, ces matériaux isolants peuvent être constitués de matière plastique, telle que du Kapton^{Ⓡ} ou de sulfure de zinc ZnS ou de l'AlN (nitrure d'aluminium), ou un oxyde (SiO₂, oxyde pour GaN).

Les isolants à forte permittivité peuvent être choisis parmi : le dioxyde d'Hafnium (HfO₂), le dioxyde de Zirconium (ZrO₂), le Pentoxyde de Tantale (Ta₂O₅), le trioxyde d'Aluminium (Al₂O₃), dont les permittivités sont comprises entre 10 et 100, ou les PZT (matériau de formule chimique Pb(ZrₓTi)-ₓ)O₃), dont la permittivité peut être supérieure à 100.

On peut également utiliser le dioxyde de silicium, couramment mis en oeuvre dans le domaine de la microélectronique, et dont la permittivité est égale à 4.

Les matériaux isolants à faible permittivité peuvent être choisis parmi le SiO₂ poreux, le Si02 poreux dopé au Carbone, ou encore des polymères organiques connus de l'homme du métier sous la marque déposée SILK (Spin-on organic polymeric dielectrics), ces derniers étant poreux.. La permittivité de ces matériaux est généralement comprise entre 2 et 2.5.

Par effet de champ, la zone sensible de chacune de ces électrodes non collectantes est située au voisinage de sa pointe, et ce sur une distance qui dépend du diamètre et de la courbe de pointe.

Chacune de ces électrodes non collectante est reliée à sa propre voie de mesure (51,52, 53 et 54), mais on peut également imaginer que plusieurs électrodes non collectantes soient reliées à une voie de lecture commune.

La figure 3 représente une simulation en deux dimensions des lignes de champ produites par un détecteur comprenant une pluralité d'électrodes non collectantes de différentes longueurs (41 - 44). L'épaisseur du matériau de détection (2) est de 500 micromètres Les anodes, disposées selon un plan, sont portées au potentiel de masse, tandis que la cathode est portée au potentiel -100 V.

Les différents ombrages représentent le potentiel dans le matériau détecteur (2), chaque zone d'ombrage étant délimitée par des lignes isopotentielles (65)sensiblement parallèles à l'anode et à la cathode.

Les lignes de champ (66) sont sensiblement perpendiculaires aux lignes isopotentielles (65). Les porteurs de charges migrent de la cathode vers l'anode suivent ces lignes de champ, et passent ainsi à proximité des électrodes non collectantes. On peut observer que les lignes de champ contournent les électrodes non collectantes.

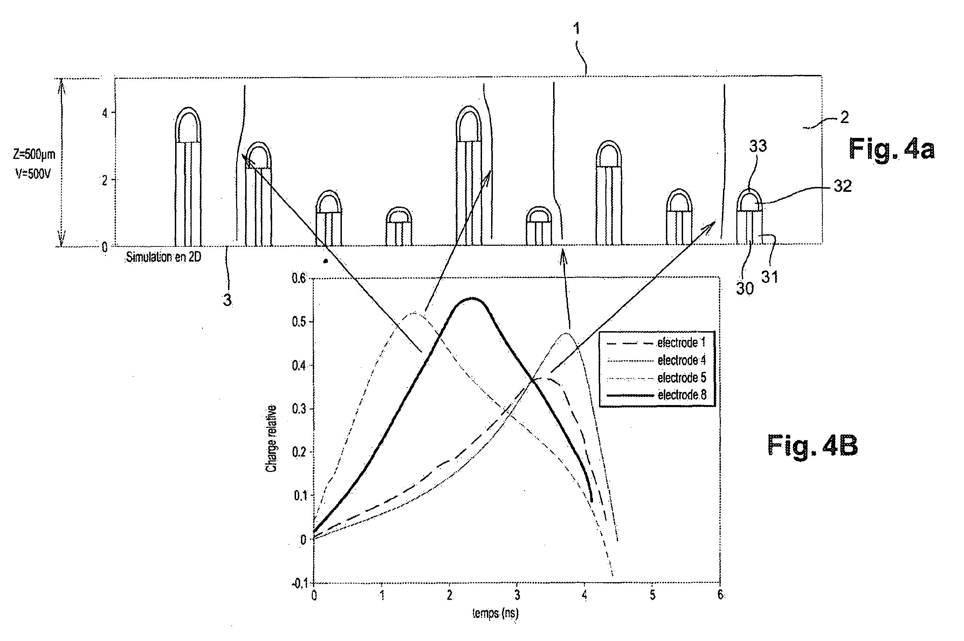

En se référant à la figure 4a, on retrouve le milieu détecteur (2) représenté en deux dimensions, polarisé par une cathode (1) (plan supérieur) et pluralité d'anodes (3) (plan inférieur). Les trajectoires de quatre porteurs de charges négatifs sont représentées. Pour chacune de ces trajectoires, la figure 4b indique la charge relative induite dans l'électrode non collectante la plus proche en fonction du temps, l'électron étant supposé à proximité immédiate de la cathode à t = 0. Cette simulation a été effectuée avec le logiciel Comsol. On observe que la présence des électrodes non collectante modifie peu le trajet des porteurs de charges et que la charge relative maximale induite est relativement importante.

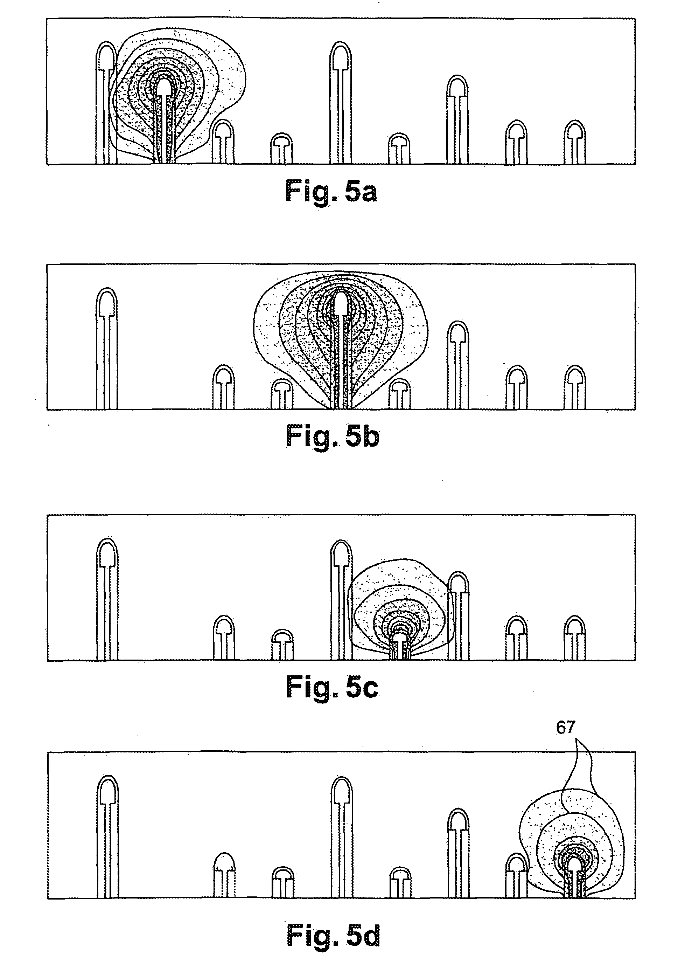

Les figures 5a à 5d représentent une simulation en deux dimensions de la distribution du potentiel de pondération au voisinage d'une électrode non collectante. Un tel potentiel de pondération est défini comme le rapport de la charge induite dans l'électrode non collectante sur la charge du porteur de charge. On a représenté par la référence (67) les lignes isopotentielles. La charge induite dans une électrode non collectante est d'autant plus élevée que la trajectoire du porteur de charge passe à proximité de la pointe de l'électrode non collectante. On parle alors d'effet de pointe, l'extrémité de l'électrode non-collectante pouvant être assimilée à une pointe.

On remarque également que les lignes de champ ont une forme influencée par leur environnement, et notamment par les électrodes voisines, qu'elles soient collectantes ou non collectantes.

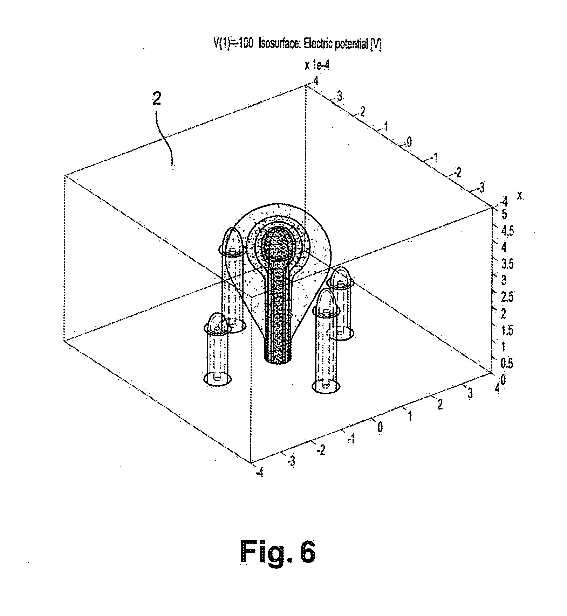

La figure 6 représente une simulation 3D, montrant la distribution en trois dimensions du potentiel de pondération au voisinage d'une électrode non collectante. Ce sont les plans du bas et du haut (non représentés) qui collectent respectivement les électrons et les trous. On retrouve alors l'effet de pointe précédemment décrit.

En mode de fonctionnement, un rayonnement ionisant incident, par exemple un photon X ou gamma (4), pénètre partiellement à travers le détecteur et, en suite de son interaction avec le matériau constitutif du détecteur proprement dit (2), il se créé un nuage de porteurs de charge notamment d'électrons (5) et de trous (non représentés).

Sous l'effet du champ électrique appliqué entre la (ou les) cathode(s) (1) et la ou les anode(s) (3), le nuage de porteurs de charge (5), par exemple des électrons, dérive dans le matériau (2) en direction des anodes (3) dans le cas d'électrons ou de la (ou les) cathode(s) pour les trous. En passant à proximité de la pointe de chaque électrode non collectante (41-44), le nuage de porteurs de charge (5) induit un signal (61-64), illustré sur la gauche de la figure 1, différent pour chacune desdites électrodes non collectantes concernées. En effet, en raison des propriétés réduites de transport de charge du matériau (2), le signal induit au niveau de chacune des électrodes non collectantes décroit durant la migration du nuage d'électrons (5) en direction des anodes (3), en raison également de la différence de hauteur de chacune desdites électrodes non collectantes. Cet état de fait a bien été illustré au sein des figures 4a et 4b.

En passant à proximité de la pointe desdites électrodes non collectantes, le nuage de porteurs de charge (5) génère des charges induites correspondant au signal (61, 62, 63, 64), dépendant de la charge véhiculée. Une mesure de ces charges induites dans les électrodes non collectantes permet de fait de détecter une interaction. Par des moyens simples, il devient alors possible de déterminer l'électrode non collectante située le plus prêt du lieu de l'interaction. Ces moyens, connus de l'homme du métier peuvent par exemple être constitués :
- d'un amplificateur de courant relié en série à un ou plusieurs comparateurs, permettant de comparer l'intensité du courant induit par rapport à un seuil
- d'un amplificateur de charge, permettant de mesurer la charge,
- de moyens permettant de sélectionner la première électrode produisant un signal significatif.
- de moyens permettant d'attribuer une date à chaque signal produit.

Ce faisant, l'invention telle que mise en oeuvre par ce mode de réalisation particulier, permet d'obtenir de manière précise les coordonnées X, Y et Z du lieu de l'interaction du photon incident avec le détecteur.

Avantageusement, on optimise l'espace entre chacune de ces électrodes non collectantes de façon à minimiser les zones mortes, c'est à dire les zones correspondant à un volume à l'intérieur duquel une interaction n'induit aucun signal.

En outre, en raison de cette configuration, un signal peut être mesuré sur une électrode non collectante quand bien même les charges sont piégées au cours de leur migration et n'atteignent pas lesdits premier ou second ensembles d'électrodes, c'est-à-dire la cathode ou les anodes.

Selon une caractéristique avantageuse de l'invention, le différentiel de hauteur entre deux électrodes non collectantes est préférentiellement inférieur au libre parcours moyen des porteurs de charge au sein du matériau détecteur (2) considéré. De fait, on choisit un nombre de hauteurs différentes pour les électrodes non collectantes supérieur au rapport de l'épaisseur du détecteur sur le libre parcours moyen des porteurs de charge.

En considérant par exemple un matériau détecteur constitué d'Arséniure de Gallium (GaAs), les électrons ayant une mobilité d'environ 4000 cm²/V/s, et une durée de vie moyenne de 5ns, le libre parcours moyen d'un électron est d'environ 200 micromètres. Selon la géométrie décrite sur la figure 1, on peut choisir un pas de hauteur 100 micromètres si l'on souhaite que le nuage de charges soit vu au moins une fois. Dans les applications médicales basées sur la détection de rayonnement X d'énergie moyenne 60keV, l'épaisseur d'un plan détecteur constitué d'un tel matériau est sensiblement égale à 1 millimètre. On distingue alors neuf hauteurs d'électrodes collectantes, comprises entre 100 et 900 micromètres par pas de 100 micromètres. On dispose ainsi d'un pavage régulier selon tout le plan du détecteur.

On a indiqué précédemment qu'à chaque électrode non collectante était associée une voie de mesure. Dans une variante, on peut connecter les électrodes non collectantes de même caractéristique, et notamment de même hauteur par interconnexion en macropixel et ce, dans un souci de réduction de nombre de voies de mesure et donc, de simplification de réalisation du détecteur.

Il peut également être envisagé de réaliser une interconnexion entre électrodes, afin de réduire le nombre de voies de mesures, par exemple en utilisant le principe de connexion décrit dans le document FR 2 887 993 déjà mentionné.

La réalisation de détecteurs conformes à cette première forme de réalisation peut être effectuée de deux manières différentes.

Selon un premier mode de fabrication, on part d'un substrat massif du matériau détecteur dans lequel sont réalisés des trous par perçage mécanique (au moyen d'une perceuse), thermique (au moyen d'un laser), par sublimation (là encore par laser), par voie chimique, plasma, ou par tout procédé adapté au matériau, aux dimensions et aux facteurs de forme élevés. De préférence, les faces avant et arrière du détecteur sont protégées par des résines de lithographie couramment utilisées en microélectronique. En cas de perçage chimique ou plasma, on réalise un motif de trous dans la résine par insolation, selon un procédé de photolithographie. Dans le cas de perçages selon des procédés mécaniques ou thermiques, les surfaces du détecteur peuvent être protégées, mais l'étape de photolithographie n'est pas nécessaire.

Un isolant est ensuite déposé sur les parois de chaque trou, par exemple par pulvérisation évaporation, ou par voie chimique. On dépose alors un matériau conducteur à l'intérieur contre les flancs de cette cavité, par pulvérisation, évaporation ou croissance électrochimique.

Les électrodes sont ensuite réalisées selon les étapes suivantes
- usinage laser de trous de profondeur donnée (la profondeur totale) ;
- remplissage desdits trous avec l'isolant forte permittivité, à hauteur de la tête d'électrode ;
- usinage d'un trou de la forme de la tête d'électrode : diamètre inférieur au premier usinage, et permettant de laisser une certaine épaisseur d'isolant au fond ;
- remplissage de la cuvette ainsi formée par du métal ;
- remplissage du reste du trou par l'isolant de faible permittivité ;
- usinage à nouveau de la forme du pied de l'électrode ;
- remplissage par du métal

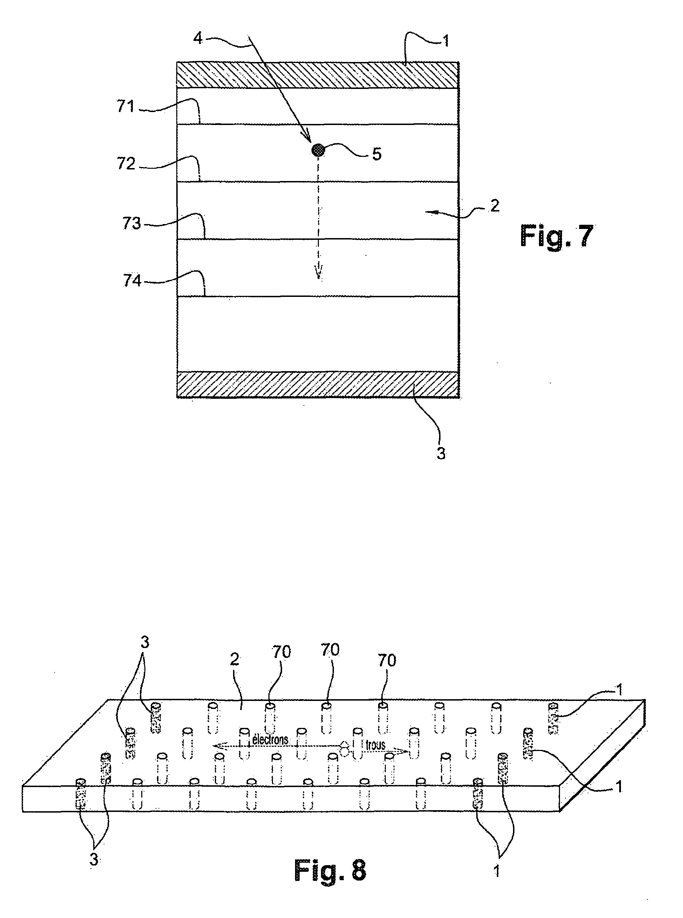

On a décrit en relation avec la figure 7 un autre mode de réalisation de l'invention. Selon celui-ci, les électrodes non collectantes (71-74) sont enterrées dans le matériau détecteur (2), cette fois non pas parallèlement au champ électrique mais perpendiculairement à celui-ci. Avantageusement, lesdites électrodes non collectantes traversent le matériau détecteur (2) sur toute la surface de celui-ci. Elles s'étendent donc parallèlement par rapport aux plans formés par la cathode (1) et les anodes (3). Elles sont de forme longiligne.

Sous l'effet du champ électrique de polarisation généré entre la cathode (1) et les anodes (3), le nuage d'électrons (5) généré en suite de l'interaction d'un photon (4) au sein du matériau (2) migre et génère des charges induites au niveau des électrodes non collectantes voisines. Là encore, lesdites électrodes non collectantes sont reliées chacune à une voie de mesure, de sorte qu'il devient possible de détecter l'interaction précitée, même si les porteurs de charge générés par l'interaction n'atteignent pas les électrodes polarisantes (1) et (3).

Il devient également possible de disposer d'une information spatiale sur le lieu de l'interaction par détection du signal correspondant au signal détecté par les électrodes non collectantes les plus voisines. L'espacement entre les électrodes non collectantes est choisi de telle sorte qu'il soit inférieur au libre parcours moyen des porteurs de charge au sein du matériau de détection (2).

Contrairement au premier mode de réalisation, la zone utile des électrodes non collectantes n'est pas constituée par leur pointe, mais par toute leur longueur. La géométrie de ces électrodes non collectantes est également différente de celles décrites dans le premier mode de réalisation : l'épaisseur de la gaine d'isolant est constante, et le matériau constituant cette gaine peut-être identique sur toute la longueur de la gaine.

Le mode de fabrication de ce second mode de réalisation est identique au précédent, les trous réalisés dans le matériau détecteur étant préférentiellement débouchant.

On conçoit dès lors que la mise en oeuvre de l'invention permet tout d'abord d'aboutir de manière simple à une information spatiale du lieu d'interaction, et d'autre part de mettre en oeuvre des matériaux de détection non utilisables jusqu'alors en raison de la longueur réduite du transport des charges, et donc moins coûteux.

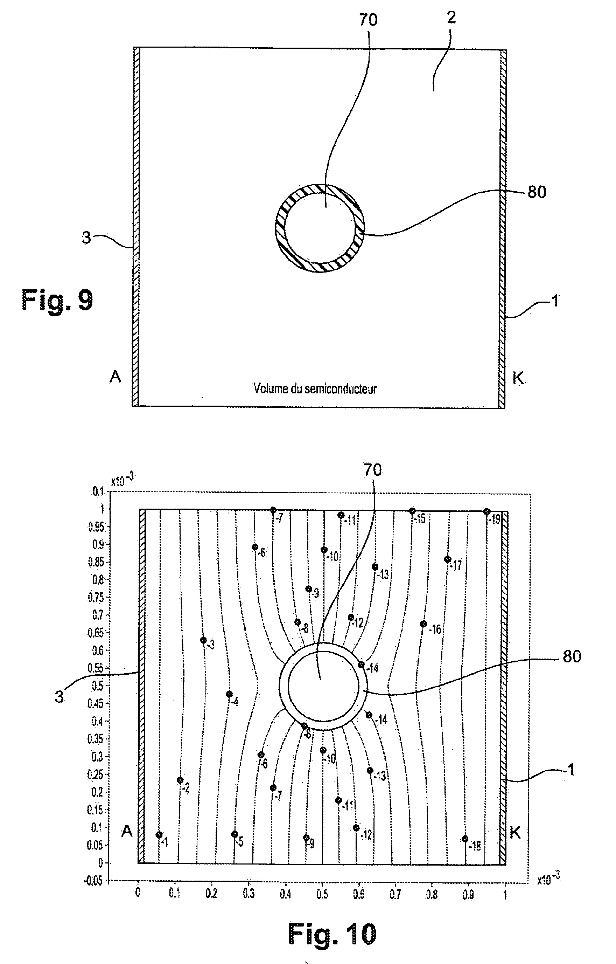

Des simulations ont été réalisées, permettant une évaluation de la charge induite dans une électrode non collectante traversante, selon le second mode de réalisation. Ces simulations sont illustrées en relation avec les figures 9 à 13.

La figure 9 représente un détecteur solide, dans lequel on distingue les électrodes de polarisation (cathodes et anodes), ainsi qu'une électrode non collectante (70), disposée perpendiculairement au champ électrique résultant de la polarisation. Cette électrode non collectante est isolée du matériau sensible au rayonnement par une enveloppe réalisée en un matériau isolant (80). Sur cette figure, et à titre d'exemple non limitatif, l'électrode non collectante est disposée parallèlement à l'anode et aux cathodes.

La figure 10 représente les différentes lignes isopotentielles, certaines valeurs numériques représentant des valeurs de potentiel étant indiquées à titre d'exemple. le matériau détecteur est réalisé en CdTe, d'épaisseur 1 millimètre, soumis à un champ électrique de 20 V/mm, sans prise en compte du piégeage de porteurs de charges.

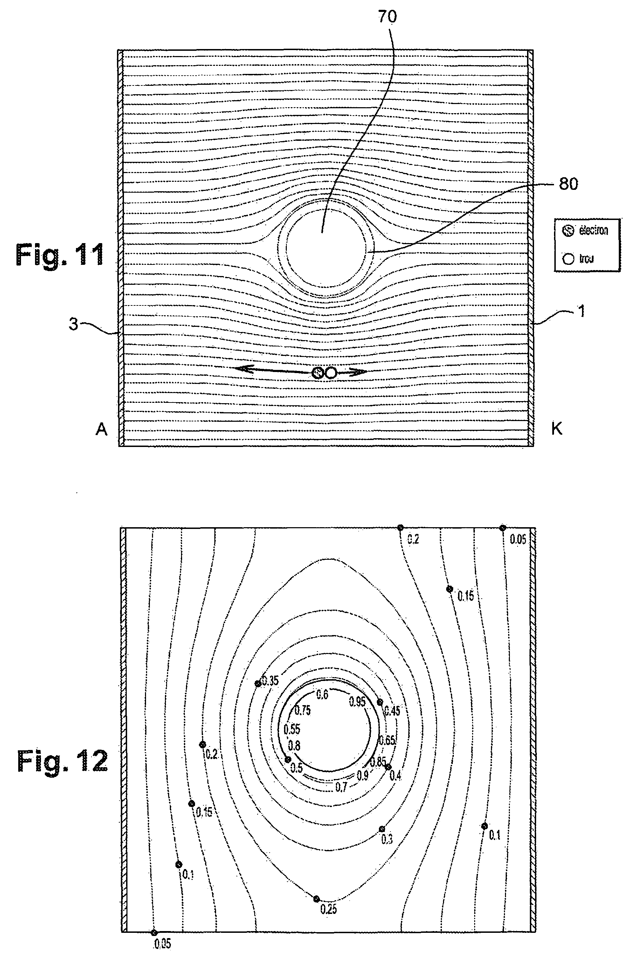

La figure 11 représente les lignes de champ électrique, outre également les trajectoires suivies par les porteurs de charge au cours de leur migration.

La figure 12 représente le potentiel de pondération sur une électrode non collectante en fonction de la position du porteur de charge dans le détecteur. Ainsi que déjà indiqué, le potentiel de pondération peut être défini comme le rapport entre une charge induite dans l'électrode non collectante par l'ensemble des porteurs de charge créés par une interaction, durant tout leur parcours dans le matériau détecteur, sur la charge crée par cette interaction. Il est ici compris entre 0 (les porteurs ne génèrent aucune charge induite) et 1 (la charge induite est égale à la charge des porteurs)

Une paire électron-trou créée à proximité immédiate de l'électrode non collectante va migrer en traversant toute la zone d'influence de cette électrode et induire un signal sur l'électrode égal à 100% de la charge de la paire électron-trou égal à une fois la charge de ladite paire. De même, un porteur libre, électron ou trou, terminera sa course en étant absorbé sur l'anode ou sur la cathode. Aucun signal ne pourra être induit sur l'électrode centrale à partir de ce moment là. Le potentiel de pondération de l'anode comme de la cathode est donc nul.

Cela signifie également que, si on ne tient pas compte du piégeage, une paire électron-trou créée sur la ligne où le potentiel de pondération est de 0.3 induit un signal correspondant à 0.3*la charge de la paire électron-trou (0.3*la charge de l'électron + 0.3* la charge du trou).

Cette simulation, a été réalisée à l'aide du logiciel COMSOL, le matériau détecteur étant le CdTe, d'épaisseur 1 millimètre, soumis à un champ électrique de 20 V/mm, sans prise en compte du piégeage de porteurs de charges.

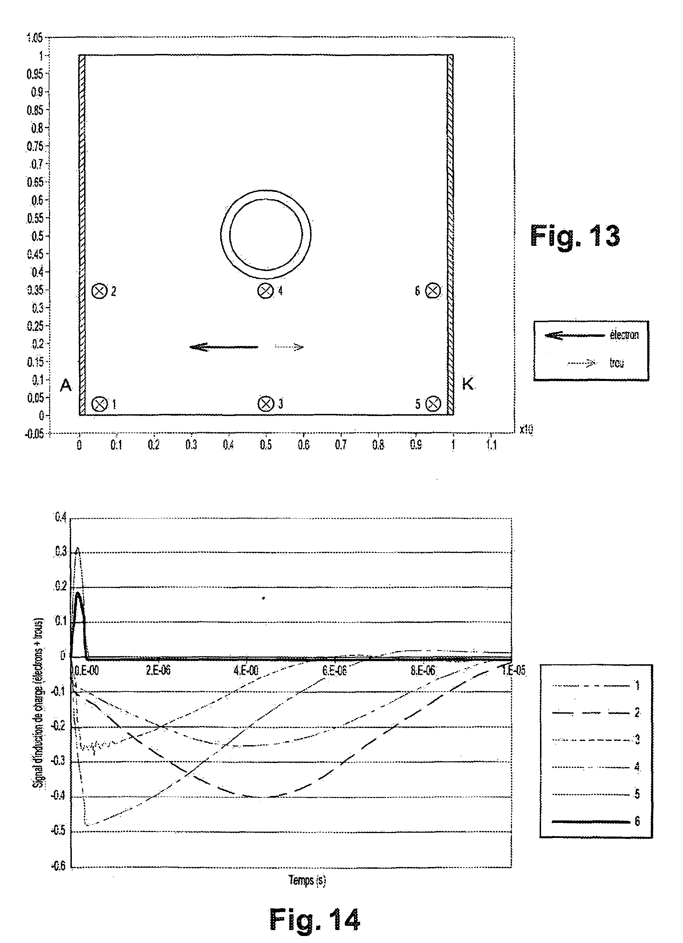

Les figures 13 et 14 représentent les charges induites sur l'électrode non collectante par une interaction libérant une paire électron-trou dans différents endroits du matériau détecteur, sans prise en compte du piégeage (ou durée de vie du porteur élevée).

Ainsi, les interactions référencées 1 et 2, situées à proximité de l'anode, génèrent au niveau de l'électrode non collectante, un signal négligeable du aux électrons. Le signal du aux trous augmente au fur et à mesure que les porteurs se rapprochent de l'électrode non collectante, puis diminue au fur et à mesure qu'ils s'en éloignent. Le signal induit est d'autant plus grand que la migration des porteurs de charge s'effectue le long d'une ligne de champ située à proximité de l'électrode non collectante.

Les interactions référencées 3 et 4 ont lieu à proximité de l'électrode non collectante. La mobilité des électrons étant plus élevée que celle des trous, le signal se décompose en une contribution des électrons très rapide, puis en une contribution des trous beaucoup plus lente.

Les interactions référencées 5 et 6 ont lieu près de la cathode. Le signal du au trou est négligeable, tandis que le signal électronique augmente puis diminue, de manière très rapide, la mobilité des électrons étant bien supérieure à celle des trous dans le matériau détecteur considéré. Le graphe de la figure 12 montre que, dans cette configuration, l'électrode non collectante détecte un signal durant une période d'environ 100ns suivant une interaction.

Il résulte de ce graphe, que l'on peut localiser de manière précise le lieu d'interaction du photon incident.

L'invention précédemment décrite concerne les détecteurs semi-conducteurs dans lesquels les porteurs de charges les plus mobiles sont des électrons, mais l'homme du métier comprendra que cette invention peut également s'appliquer dans des matériaux semi-conducteurs dans lesquels les propriétés de transport des trous peuvent être mises à profit. Il s'agit par exemple de l'InP (Phosphate d'Indium) ou certains polymères semi-conducteurs

## Revendications

1. Dispositif de détection de rayonnements ionisants comprenant un empilement intégrant un premier ensemble d'électrodes (1), un matériau détecteur solide sensible aux rayonnements ionisants (2), susceptible d'interagir avec celui-ci par libération de porteurs de charges mobiles électrons-trous, un second ensemble d'électrodes (3), lesdits premier et second ensembles d'électrodes étant polarisés de telle façon qu'un champ électrique soit appliqué à travers le matériau détecteur (2), permettant ainsi la migration des porteurs de charges générés par l'interaction entre le matériau détecteur et le rayonnement ionisants, et en outre des électrodes isolées électriquement (41 - 44 ; 71 - 74), dénommées électrodes non collectantes, **caractérisé en ce que** ces électrodes non collectantes sont positionnées au sein du volume du matériau détecteur (2) soumis au champ électrique, et aptes par effet capacitif, à détecter les charges induites par la migration des porteurs de charge dans le volume du détecteur soumis au champ électrique.

2. Dispositif de détection de rayonnements ionisants selon la revendication 1, ***caractérisé* en ce que** les électrodes non collectantes (41 - 44 ; 71 - 74) sont séparées du milieu détecteur (2) par une couche électriquement isolante.

3. Dispositif de détection de rayonnements ionisants selon l'une des revendications 1 et 2, ***caractérisé* en ce que** chaque électrode non-collectante (41 - 44) est constituée :
• d'un canal conducteur (30), de longueur variable, en continuité électrique avec l'un desdits ensembles d'électrodes, et isolé du matériau détecteur (2) au moyen d'une première épaisseur d'un premier matériau isolant (31) de permittivité diélectrique faible ;
• d'une extrémité (32), de faible longueur au regard de la longueur du canal (30) et de largeur ou de diamètre supérieur à celui (celle) du canal (30), également réalisée en un matériau conducteur et en continuité électrique avec le canal (30), ladite extrémité étant isolée du matériau détecteur (2) au moyen d'un second matériau isolant (33), de permittivité diélectrique plus élevée que celle dudit premier matériau isolant (31) mais d'épaisseur plus faible que ce dernier.

4. Dispositif de détection de rayonnements ionisants selon la revendication 3, ***caractérisé* en ce que** l'épaisseur du premier matériau isolant (31) est voisine du diamètre ou de la largeur de l'électrode non collectance.

5. Dispositif de détection de rayonnements ionisants selon l'une des revendications 3 et 4, ***caractérisé* en ce que** l'épaisseur du second matériau isolant (33) est inférieure au diamètre ou à la largeur de l'électrode non collectance

6. Dispositif de détection de rayonnements ionisants selon l'une des revendications 3 à 5, ***caractérisé* en ce que** la permittivité diélectrique relative du premier matériau isolant (31) est comprise entre 1 et 4, préférentiellement voisine de 2, et **en ce que** la permittivité diélectrique relative du second matériau isolant (33) est comprise entre 4 et 13, et de préférence la plus proche possible de celle du matériau détecteur (2).

7. Dispositif de détection de rayonnements ionisants selon l'une des revendications 3 à 6, ***caractérisé* en ce que** le premier matériau isolant (31) est choisi dans le groupe comprenant les matières plastiques, le sulfure de zinc ZnS, le nitrure d'aluminium AlN, les oxydes de silicium SiO₂, dopés ou non au carbone.

8. Dispositif de détection de rayonnements ionisants selon l'une des revendications 3 à 6, ***caractérisé* en ce que** le second matériau isolant (33) est choisi dans le groupe comprenant le dioxyde d'Hafnium (HfO₂), le dioxyde de Zirconium (ZrO₂), le Pentoxyde de Tantale (Ta₂O₅), le trioxyde d'Aluminium (Al₂O₃), les PZT (Pb(ZrₓTi₁₋ₓ)O₃).

9. Dispositif de détection de rayonnements ionisants selon l'une des revendications 1 à 8, ***caractérisé* en ce que** chaque électrode non-collectante (41 - 44 ; 71 - 74) est connectée à sa propre voie de mesure (51 - 54), elle-même reliée à un système de traitement du signal.

10. Dispositif de détection de rayonnements ionisants selon l'une des revendications 1 à 8, ***caractérisé* en ce que** les électrodes non-collectantes (41 - 44 ; 71 - 74) de même caractéristique, dimensionnelle notamment, sont interconnectées.

11. Dispositif de détection de rayonnements ionisants selon l'une des revendications 1 à 9, ***caractérisé* en ce que** les électrodes non-collectantes (41 - 44) sont disposées parallèlement au champ électrique et présentent des longueurs différentes, l'extrémité libre desdites électrodes étant située au sein du matériau détecteur (2).

12. Dispositif de détection de rayonnements ionisants selon l'une des revendications 1 et 2, ***caractérisé* en ce que** les électrodes non-collectantes (71 - 74) sont disposées parallèlement aux premier et second ensembles d'électrodes (1, 3), et donc perpendiculairement au champ électrique, et ce, selon un ou plusieurs plans parallèles.

13. Dispositif de détection de rayonnements ionisants selon la revendication 12, ***caractérisé* en ce que** les électrodes non-collectantes (71 - 74) s'étendent selon tout le plan du matériau détecteur (2) et sont donc traversantes.

## Claims

1. Device for the detection of ionizing radiation including a first set of electrodes (1), a solid detector material sensitive to ionizing radiation (2), capable of interacting therewith by releasing electron and electron hole mobile charge carriers, a second set of electrodes (3), said first and second sets of electrodes being polarized in such a way that an electric field is applied through the detector material (2), thereby allowing the charge carriers generated by the interaction between the detector material and the ionizing radiation to migrate, and further electrically insulated electrodes (41 - 44 ; 71 - 74), known as non-collecting electrodes, **characterized in that** said non-collecting electrodes are positioned in the volume of the detector material (2) subjected to the electric field, and capable, by capacitive effect, of detecting the charges induced by the migration of the charge carriers in the volume of the detector subjected to the electric field.

2. Device for the detection of ionizing radiation as claimed in claim 1, ***characterized* in that** the non-collecting electrodes (41 - 44; 71 - 74) are separated from the detector medium (2) by an electrically insulating layer.

3. Device for the detection of ionizing radiation as claimed in one of claims 1 and 2*,* ***characterized* in that** each non-collecting electrode (41 - 44) is constituted by:
• a conductive channel (30), of variable length, in electrical continuity with one of said sets of electrodes, and insulated from the detector material (2) by means of a first thickness of a first insulating material (31) of low dielectric permittivity;
• an end (32), of short length relative to the length of the channel (30) and of width or diameter larger than that of the channel (30), also made out of a conductive material and in electrical continuity with the channel (30), said end being insulated from the detector material (2) by means of a second insulating material (33), of dielectric permittivity higher than that of said first insulating material (31) but of smaller thickness than the latter.

4. Device for the detection of ionizing radiation as claimed in claim 3, ***characterized* in that** the thickness of the first insulating material (31) is close to the diameter or the width of the non-collecting electrode.

5. Device for the detection of ionizing radiation as claimed in one of claims 3 and 4*,* ***characterized* in that** the thickness of the second insulating material (33) is less than the diameter or the width of the non-collecting electrode

6. Device for the detection of ionizing radiation as claimed in one of claims 3 to 5, ***characterized* in that** the relative dielectric permittivity of the first insulating material (31) is between 1 and 4, and preferentially close to 2, and **in that** the relative dielectric permittivity of the second insulating material (33) is between 4 and 13, and preferably as close as possible to that of the detector material (2).

7. Device for the detection of ionizing radiation as claimed in one of claims 3 to 6, ***characterized* in that** the first insulating material (31) is selected from the group that includes plastic materials, zinc sulfide ZnS, aluminum nitride AlN, silicon oxides SiO₂, whether or not carbon-doped.

8. Device for the detection of ionizing radiation as claimed in one of claims 3 to 6, ***characterized* in that** the second insulating material (33) is selected from the group that includes Hafnium dioxide (HfO₂), Zirconium dioxide (ZrO₂) Tantalum Pentoxide (Ta₂O₅), Aluminum trioxide (Al₂O₃), and PZT-based compounds (Pb(ZrₓTi₁₋ₓ)O₃).

9. Device for the detection of ionizing radiation as claimed in one of claims 1 to 8, ***characterized* in that** each non-collecting electrode (41 - 44; 71 - 74) is connected to its own measurement gage (51 - 54), itself connected to a signal processing system.

10. Device for the detection of ionizing radiation as claimed in one of claims 1 to 8, ***characterized* in that** the non-collecting electrodes (41 - 44; 71 - 74) with the same, particularly dimensional, feature are interconnected.

11. Device for the detection of ionizing radiation as claimed in one of claims 1 to 9, ***characterized* in that** the non-collecting electrodes (41 - 44) are arranged parallel to the electric field and have different lengths, the free end of said electrodes being situated in the detector material (2).

12. Device for the detection of ionizing radiation as claimed in one of claims 1 and *2,* ***characterized* in that** the non-collecting electrodes (71 - 74) are arranged parallel to the first and second sets of electrodes (1, 3), and therefore perpendicular to the electric field, and in one or more parallel planes.

13. Device for the detection of ionizing radiation as claimed in claim 12, ***characterized* in that** the non-collecting electrodes (71 - 74) extend along the entire plane of the detector material (2) and are therefore through electrodes.

## Patentansprüche

1. Vorrichtung zur Erfassung ionisierender Strahlungen, die eine Stapelung umfasst, die eine erste Elektrodengruppe (1), ein für ionisierende Strahlungen empfindliches festes Detektormaterial(2), das mit dieser durch Freisetzung mobiler Defektelektronen-Ladungsträger in Wechselwirkung treten kann, eine zweite Elektrodengruppe (3), wobei die erste und zweite Elektrodengruppe so polarisiert sind, dass ein elektrisches Feld über das Detektormaterial (2) angelegt wird, wodurch die Wanderung der durch die Wechselwirkung zwischen dem Detektormaterial und der ionisierenden Strahlung erzeugten Ladungsträger ermöglicht wird, und außerdem elektrisch isolierte Elektroden (41 - 44; 71 - 74) beinhaltet, die Nichtkollektorelektroden genannt werden, **dadurch gekennzeichnet, dass** die Nichtkollektorelektroden im Volumen des einem elektrischen Feld ausgesetzten Detektormaterials (2) angeordnet und durch eine kapazitive Wirkung in der Lage sind, Ladungen zu erfassen, die durch die Wanderung der Ladungsträger im Volumen des dem elektrischen Feld ausgesetzten Detektors induziert werden.

2. Vorrichtung zur Erfassung ionisierender Strahlungen nach Anspruch 1, **dadurch gekennzeichnet, dass** die Nichtkollektorelektroden (41 - 44; 71 - 74) durch eine elektrisch isolierende Schicht vom Detektormedium (2) getrennt sind.

3. Vorrichtung zur Erfassung ionisierender Strahlungen nach einem der Ansprüche 1 und 2, **dadurch gekennzeichnet, dass** jede Nichtkollektorelektrode (41 - 44) besteht aus:
• einem Leiterkanal (30) mit variabler Länge, der in elektrischer Durchgängigkeit mit einer der Elektrodengruppen steht und vom Detektormaterial (2) mittels einer ersten Dicke eines ersten isolierenden Materials (31) mit geringer dielektrischer Permittivität getrennt ist;
• einem Ende (32) mit geringer Länge im Hinblick auf die Länge des Kanals (30) und mit einer Breite oder einem Durchmesser, die/der größer als diejenige/derjenige des Kanals (30) ist, das ebenfalls aus einem Leitermaterial hergestellt ist und in elektrischer Durchgängigkeit mit dem Kanal (30) steht, wobei das Ende vom Detektormaterial (2) mittels eines zweiten isolierenden Materials (33) getrennt ist, das eine höhere dielektrische Permittivität als diejenige des ersten Materials (31) aber eine geringerer Dicke als dieses hat.

4. Vorrichtung zur Erfassung ionisierender Strahlungen nach Anspruch 3, **dadurch gekennzeichnet, dass** die Dicke des ersten isolierenden Materials (31) dem Durchmesser oder der Breite der Nichtkollektorelektrode nahe kommt.

5. Vorrichtung zur Erfassung ionisierender Strahlungen nach einem der Ansprüche 3 und 4, **dadurch gekennzeichnet, dass** die Dicke des zweiten isolierenden Materials (33) kleiner ist als der Durchmesser oder die Breite der Nichtkollektorelektrode.

6. Vorrichtung zur Erfassung ionisierender Strahlungen nach einem der Ansprüche 3 bis 5, **dadurch gekennzeichnet, dass** die relative dielektrische Permittivität des ersten isolierenden Materials (31) zwischen 1 und 4, vorzugsweise um 2 liegt, und dass die relative dielektrische Permittivität des zweiten isolierenden Materials (33) zwischen 4 und 13 und vorzugsweise so nahe wie möglich an derjenigen des Detektormaterials (2) liegt.

7. Vorrichtung zur Erfassung ionisierender Strahlungen nach einem der Ansprüche 3 bis 6, **dadurch gekennzeichnet, dass** das erste isolierende Material (31) aus der Gruppe ausgewählt ist, die Kunststoffe, Zinkschwefel ZnS, Aluminiumnitrid AlN, Siliciumoxide SiO₂ umfasst, die gegebenenfalls mit Kohlenstoff dotiert sind.

8. Vorrichtung zur Erfassung ionisierender Strahlungen nach einem der Ansprüche 3 bis 6, **dadurch gekennzeichnet, dass** das zweite isolierende Material (33) aus der Gruppe ausgewählt ist, die Hafniumdioxid (HfO₂), Zirkoniumdioxid (ZrO₂), Tantalpentoxid (Ta₂O₅), Aluminiumtrioxid (Al₂O₃), PZT (Pb(ZrₓTi₁₋ₓ)O₃) umfasst.

9. Vorrichtung zur Erfassung ionisierender Strahlungen nach einem der Ansprüche 1 bis 8, **dadurch gekennzeichnet, dass** jede Nichtkollektorelektrode (41 - 44; 71 - 74) an ihre eigene Messbahn (51 - 54) angeschlossen ist, die wiederum an ein Signalverarbeitungssystem angeschlossen ist.

10. Vorrichtung zur Erfassung ionisierender Strahlungen nach einem der Ansprüche 1 bis 8, **dadurch gekennzeichnet, dass** die Nichtkollektorelektroden (41 - 44; 71 - 74) mit derselben Charakteristik, insbesondere Abmessungscharakteristik, zusammengeschaltet sind.

11. Vorrichtung zur Erfassung ionisierender Strahlungen nach einem der Ansprüche 1 bis 9, **dadurch gekennzeichnet, dass** die Nichtkollektorelektroden (41 - 44) parallel zum elektrischen Feld vorgesehen sind und verschiedene Längen aufweisen, wobei sich das freie Ende der Elektroden im Detektormaterial (2) befindet.

12. Vorrichtung zur Erfassung ionisierender Strahlungen nach einem der Ansprüche 1 und 2, **dadurch gekennzeichnet, dass** die Nichtkollektorelektroden (71 - 74) parallel zur ersten und zweiten Elektrodengruppe (1, 3) und somit senkrecht zum elektrischen Feld und zwar entlang einer oder mehreren parallelen Ebenen vorgesehen sind.

13. Vorrichtung zur Erfassung ionisierender Strahlungen nach Anspruch 12, **dadurch gekennzeichnet, dass** die Nichtkollektorelektroden (71 - 74) sich entlang der gesamten Ebene des Detektormaterials (2) erstrecken und somit überquerend sind.
